(19) Europäisches Patentamt / European Patent Office / Office européen des brevets

(11) EP 1 065 228 B1

(12) # EUROPÄISCHE PATENTSCHRIFT

(45) Veröffentlichungstag und Bekanntmachung des Hinweises auf die Patenterteilung:
**24.10.2012 Patentblatt 2012/43**

(21) Anmeldenummer: **00111976.7**

(22) Anmeldetag: **19.06.2000**

(51) Int Cl.:
***C08G 18/08*** (2006.01) ***C08G 18/12*** (2006.01)
***C08G 18/66*** (2006.01) ***C08G 18/70*** (2006.01)
***C08G 18/72*** (2006.01) ***C08G 18/78*** (2006.01)
***C09D 175/06*** (2006.01)

(54) **Bindemittelkombination für wässrige Beschichtungen**

Binder combination for aqueous coatings

Mélange de liants pour revêtements aqueux

(84) Benannte Vertragsstaaten:
**AT BE CH CY DE DK ES FI FR GB GR IE IT LI LU MC NL PT SE**

(30) Priorität: **29.06.1999 DE 19929784**

(43) Veröffentlichungstag der Anmeldung:
**03.01.2001 Patentblatt 2001/01**

(73) Patentinhaber: **Bayer MaterialScience AG**
**51368 Leverkusen (DE)**

(72) Erfinder:
- **Irle, Christoph, Dr.**
  **47800 Krefeld (DE)**
- **Laas, Hans-Josef, Dr.**
  **50733 Köln (DE)**
- **Kremer, Wolfgang**
  **47647 Kerken (DE)**
- **Roschu, Rolf**
  **47877 Willich (DE)**
- **Lühmann, Erhard**
  **51375 Leverkusen (DE)**

(56) Entgegenhaltungen:
**EP-A- 0 469 389** **EP-A- 0 540 985**
**EP-A- 0 959 115** **US-A- 5 252 696**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Bindemittelkombinationen für wässrige Beschichtungen, ein Verfahren zu deren Herstellung und ihre Anwendung für die Beschichtung von mechanisch beanspruchten Flächen.

Bei der Beschichtung mechanisch stark beanspruchter Flächen wie Holz-, Kunststoff- oder Betonfußböden werden zunehmend wässrige Systeme eingesetzt. Anforderungen an solche Beschichtungssysteme sind vor allem hohe Beständigkeiten gegen Chemikalien und Wasser, aber auch gegen mechanische Beschädigungen. Diese Anforderungen werden weitgehend von Polyurethan-Dispersionen erfüllt. Die verschiedenen Möglichkeiten zur Herstellung solcher Dispersionen wurden z. B. von D. Dieterich in einem Übersichtsartikel zusammengefasst [D. Dieterich, Prog. Org. Coatings 9, 281 (1981)].

Wie aus der EP-A-0 358 979 bekannt, kann die chemische und mechanische Beständigkeit von Beschichtungen verbessert werden, wenn wässrigen, Hydroxylgruppen enthaltenden Dispersionen Vernetzer mit freien Isocyanatgruppen zugefügt werden.

Eine Verbesserung der Einarbeitung solcher Isocyanat-funktioneller Vernetzer in wässrige Dispersionen wird erzielt, wenn die Polyisocyanate über hydrophile Gruppen verfügen. Hydrophilierte Polyisocyanate sind z. B. beschrieben in EP-B-0 540 985. Solche Polyisocyanate verbessern auch die chemische und physikalische Beständigkeit Hydroxylgruppen-freier Dispersionen (siehe z. B. Vaihinger, I-Lack 64 (12), S. 710 [1996].).

Die bislang dem Stand der Technik nach bekannten Kombinationen aus hydrophiliertem Polyisocyanat und Polyurethan-Dispersion haben jedoch nach wie vor den Nachteil, dass die Vermischung der Komponenten schwierig ist. So ist zur Erzielung eines glänzenden, durchsichtigen Films ein Dispergieraggregat mit hoher Scherwirkung oder aber eine Vorverdünnung des Vernetzers mit Wasser notwendig (siehe z. B. Carver S.r.I., Technisches Merkblatt DIVA/ S, DIVA/ O, rev. 04 vom 16.02.1998). Unter den Bedingungen einer handwerklichen Beschichtung, wie sie zum Beispiel in der Parkettversiegelung üblich ist, stehen Dispergieraggregate jedoch nicht zur Verfügung. Ist aber eine Vorverdünnung der Härterkomponente in genau definierter Menge und Zeit notwendig, wird die Anwendung des 2K-Lackes wesentlich erschwert.

Aus der DE-A-19 847 077 und DE-A-19 822 890 ist bekannt, dass Allophanatgruppen enthaltende Polyisocyanate eine verbesserte Einarbeitung in Hydroxylgruppen enthaltende Bindemittel aufweisen. Solche Bindemittel sind jedoch nicht als Alleinbindemittel ohne Härterkomponente geeignet.

Aufgabe der vorliegenden Erfindung war demnach die Bereitstellung von Kombinationen aus Polyurethan-Dispersionen und Polyisocyanat-Vernetzern, die zu Lackfilmen mit ausgezeichneter Beständigkeit gegen mechanische und chemische Beanspruchung führt und auch unter den Bedingungen einer handwerklichen Applikation einfach zu einem klaren, glänzenden Film mit ausgezeichneten Beständigkeitseigenschaften formuliert werden kann. Weiterhin bestand die Aufgabenstellung darin, ein Beschichtungssystem zu finden, das auch ohne Härterkomponente eine dauerhafte Beschichtung ergibt. So kann bei entsprechend niedrigeren Anforderungen, wie zum Beispiel bei der Beschichtung von weniger stark beanspruchten Fußböden bei Verzicht auf die maximal erreichbare Beständigkeit - der Vorteil der einfacheren Applikation ohne Einarbeitung der Härterkomponente erlangt werden.

Überraschend wurde nun gefunden, dass die Aufgabe durch die wässrige Bindemittel kombination des Anspruchs 1 gelöst werden kann.

Geeignete Diisocyanate (A1) sind grundsätzlich solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4-bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'-und 4,4'-Diisocyanatodiphenylmethan, 1,5-Diisocyanatonaphthalin oder beliebige Gemische solcher Diisocyanate.

Bevorzugt handelt es sich um Polyisocyanate oder Polyisocyanatgemische der genannten Art mit ausschließlich aliphatisch und/oder cycloaliphatisch gebundenen Isocyanatgruppen. Ganz besonders bevorzugte Ausgangskomponenten (A1) sind Polyisocyanate bzw. Polyisocyanatgemische auf Basis von HDI, IPDI und/oder 4,4'-Diisocyanatodicyclohexylmethan.

Weiterhin geeignet als Polyisocyanate (A1) sind beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Iminooxadiazindion- und/oder Oxadiazintrionstruktur, wie sie beispielsweise in J. Prakt. Chem. 336 (1994) 185 - 200, DE-A-1 670 666, DE-A-1 954 093, DE-A-2 414 413, DE-A-2 452 532, DE-A-2 641 380, DE-A-3 700 209, DE-A-3 900 053 und DE-A-3 928 503 oder EP-A-0 336 205, EP-A-0 339 396 und EP-A-0 798 299 beispielhaft beschrieben sind.

Die polymeren Polyole (A2) in dem Molgewichtsbereich von 400 - 6000 sind die üblichen wie sie für Polyurethane

bereits seit langem eingesetzt werden, mit einer OH-Funktionalität von mindestens 1,8 bis ca. 4 wie zum Beispiel Polyacrylate, Polyester, Polyether, Polycarbonate, Polyestercarbonate, Polyacetale, Polyolefine und Polysiloxane. Bevorzugt verwendet werden Polyole in einem Molgewichtsbereich von 600 bis 2500 mit einer OH-Funktionalität von 2 bis 3.

Neben dem Einsatz difunktioneller OH-Komponenten kommt, wie aus der Literatur bekannt, auch die Terminierung des Polyurethan-Präpolymers mit einem monofunktionellen Alkohol (A3) in Betracht. Geeignete Monoalkohole (A3) sind bevorzugt aliphatische Monoalkohole mit 1 - 18 C-Atomen wie zum Beispiel Ethanol, n-Butanol, Ethylenglykolmonobutylether, 2-Ethylhexanol, 1-Octanol, 1-Dodecanol, oder 1-Hexadecanol.

Polyole, Aminopolyole oder Polyamine mit einem Molgewicht unter 400 (A4), die als Kettenverlängerer in Polyurethanen bzw. Polyurethan-Dispersionen Verwendung finden können, sind in der entsprechenden Literatur ebenfalls in großer Zahl beschrieben. Als Beispiel seien genannt: Ethandiol, 1,4-Butandiol, 1,6-Hexandiol, Neopentylglykol, Cyclohexandimethanol, Trimethylolpropan, Glycerin sowie Hydrazin, Ethylendiamin, 1,4-Diaminobutan, Isophorondiamin und 4,4-Diaminodicyclohexylmethan.

Weiterhin können die erfindungsgemäßen Polyurethandispersionen hydrophile Polyoxyalkylenether (A5) mit mindestens einer Hydroxy- oder Aminogruppe enthalten. Diese Polyether enthalten einen hohen Anteil (ca. 30 Gew.-% bis 100 Gew.-%) an Bausteinen, die vom Ethylenoxid abgeleitet sind. In Frage kommen linear aufgebaute Polyether einer Funktionalität zwischen 1 und 3, aber auch Verbindungen der allgemeinen Formel I

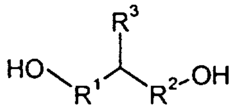

(II)

wobei $R^1$ und $R^2$ unabhängig voneinander jeweils einen zweiwertigen aliphatischen, cycloaliphatischen oder aromatischen Rest mit 1 bis 18 C-Atomen, die durch Sauerstoff und/ oder Stickstoffatome unterbrochen sein können, bedeuten und $R^3$ für einen nicht-hydroxyterminierten Polyester oder bevorzugt Polyether steht. Besonders bevorzugt steht $R^3$ für einen alkoxyterminierten Polyethylenoxidrest.

Die Hydroxy-Komponenten (A2), (A3) und (A4) können Doppelbindungen enthalten, die z.B. aus langkettigen aliphatischen Carbonsäuren oder Fettalkoholen stammen können. Eine Funktionalisierung mit olefinischen Doppelbindungen ist z.B. möglich durch den Einbau allylischer Gruppen oder von Acrylsäure oder Methacrylsäure sowie deren jeweiligen Estern.

Komponenten (A3) bzw. (A4), die eine ionische Gruppen enthalten oder zur Ausbildung einer ionischen Gruppe befähigt sind, sind z. B. Dimethylolpropionsäure, Hydroxypivalinsäure, das propoxylierte Addukt aus 2-Butendiol und $NaHSO_3$ sowie in kationische Gruppen überführbare Bausteine wie N-Methyl-diethanolamin. Bevorzugt werden solche Komponenten (A3) bzw. (A4) eingesetzt, die über Carboxy- oder Carboxylatgruppen verfügen.

Die Herstellung der wässrigen PUR-Dispersionen (A) erfolgt in der bekannten üblichen Art: Man lässt die Polyisocyanatkomponente mit polymerem Polyol und niedermolekularen Kettenverlängerern zu einem Polyurethan ausreagieren, wobei gegebenenfalls und vorteilhaft ein Lösungsmittel mitverwendet wird, das später gegebenenfalls wieder abgetrennt werden kann. Als Lösemittel geeignet sind die an sich bekannten üblichen Lacklösemittel, wie z.B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, Mischungen, die vor allem höher substituierte Aromaten enthalten, wie sie beispielsweise unter den Bezeichnungen Solvent Naphtha, Solvesso® (Exxon), Cypar® (Shell), Cyclo Sol® (Shell), Tolu Sol® (Shell), Shellsol® (Shell) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

In einem weiteren Schritt werden anschließend zur Neutralisation befähigte Gruppen in die Salzform überführt und mit Wasser die Dispersion erzeugt. Je nach Neutralisationsgrad und Gehalt ionischer Gruppen kann die Dispersion sehr feinteilig eingestellt werden, so dass sie praktisch das Aussehen einer Lösung hat, aber auch sehr grobteilige Einstellungen sind möglich, die ebenfalls ausreichend stabil sind. Vorteilhaft sind jedoch niedrige mittlere Teilchengrößen von < 100 nm bzw. hohe Anteile hydrophiler Gruppen, da dies die Emulgierung des Polyisocyanats und damit die Qualität des Lackfilms verbessert. Auch der Feststoffgehalt kann in weiten Grenzen von z.B. 20 - 50 % variiert werden.

Überschüssige Isocyanatgruppen werden dann durch Umsetzung mit polyfunktionellen isocyanatreaktiven Verbindungen zur Reaktion gebracht (Kettenverlängerung). Hierzu werden bevorzugt Wasser oder die bereits unter (A4) genannten Polyamine, besonders bevorzugt Di- sowie Triamine und Hydrazin eingesetzt. Auch die Terminierung mit einem Monoamin wie z.B. Diethylamin, Dibutylamin, Ethanolamin, N-Methylethanolamin oder N,N-Diethanolamin ist möglich.

Weiterhin ist es möglich, die erfindungsgemäßen Polyurethan-Dispersionen durch Polyacrylate zu modifizieren.

Hierzu wird in Gegenwart der Polyurethan-Dispersion eine Emulsionspolymerisation von olefinisch ungesättigten Monomeren, z.B. Estern aus (Meth)acrylsäure und Alkoholen mit 1 - 18 C-Atomen, Styrol, Vinylestern oder Butadien durchgeführt, wie es zum Beispiel in DE-A-1 953 348, EP-A-0 167 188, EP-A-0 189 945 und EP-A-0 308 115 beschrieben ist. Die Monomere enthalten eine oder mehrere olefinische Doppelbindungen . Daneben können die Monomere funktionelle Gruppen wie Hydroxyl-, Epoxy-, Methylol- oder Acetoacetoxygruppen enthalten.

Bei der Polyisocyanatkomponente (B) ist handelt es sich um wasserdispergierbare Polyisocyanatgemische mit einem Gehalt an innerhalb von Polyetherketten gebundenen Ethylenoxideinheiten (berechnet als $C_2H_4O$; Molekulargewicht 44) von 2 bis 50 Gew.-%, wobei die Polyetherketten im statistischen Mittel 5 bis 35 Ethylenoxideinheiten enthalten, welches aufgebaut ist aus einer Polyisocyanatkomponente B1) einer (mittleren) NCO-Funktionalität von 2,0 bis 5,0, einem Gehalt an aliphatisch, cycloaliphatisch, araliphatisch und/oder aromatisch gebundenen Isocyanatgruppen (berechnet als NCO; Molekulargewicht 42) von 8,0 bis 27,0 Gew.-% und einem Gehalt an monomeren Diisocyanaten von weniger als 1 Gew.-% und

einem einwertigen, im statistischen Mittel von 5 bis 35 Ethylenoxideinheiten aufweisenden Polyalkylenoxidpolyetheralkohol (B2), und

welches dadurch gekennzeichnet ist, dass die Polyetherketten zu mindestens 60 mol-% über Allophanatgruppen mit jeweils zwei, jeweils aus mindestens zwei Diisocyanaten aufgebauten Polyisocyanatmolekülen verknüpft sind.

Die zur Herstellung der wasserdispergierbaren Polyisocyanatgemische (B) einzusetzende Komponente (B1) weist eine (mittlere) NCO-Funktionalität von 2,0 bis 5,0, vorzugsweise von 2,3 bis 4,5, einen Gehalt an Isocyanatgruppen von 8,0 bis 27,0 Gew.-%, vorzugsweise 14,0 bis 24,0 Gew.-% und einen Gehalt an monomeren Diisocyanaten von weniger als 1 Gew.-%, vorzugsweise weniger als 0,5 Gew.-% auf. Sie besteht aus mindestens einem organischen Polyisocyanat mit aliphatisch, cycloaliphatisch, araliphatisch und/oder aromatisch gebundenen Isocyanatgruppen.

Es handelt sich bei den Polyisocyanaten bzw. Polyisocyanatgemischen der Komponente (B1) um beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in der oben zur Herstellung der Polyisocyanate A1 zitierten Literatur beschrieben sind.

Geeignete Diisocyanate zur Herstellung solcher Polyisocyanate sind grundsätzlich solche des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norboman, 1,3- und 1,4-Bis-(2-isocyanato-prop-2-yl)-benzol (TMXDI), 2,4-und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Bevorzugt handelt es sich bei den zur Herstellung der wasserdispergierbaren Polyisocyanatgemische (B) einzusetzenden Komponenten (B1) um Polyisocyanate oder Polyisocyanatgemische der genannten Art mit ausschließlich aliphatisch und/oder cycloaliphatisch gebundenen Isocyanatgruppen.

Ganz besonders bevorzugte Ausgangskomponenten (B1) sind Polyisocyanate bzw. Polyisocyanatgemische mit Isocyanuratstruktur auf Basis von HDI, IPDI und/oder 4,4'-Diisocyanatodicyclohexylmethan.

Bei der Komponente (B2) handelt es sich um einwertige, im statistischen Mittel 5 bis 35, vorzugsweise 7 bis 30 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38).

Als geeignete Startermoleküle zur Herstellung dieser Polyetheralkohole (B2) seien hier beispielhaft genannt: gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan, oder Tetrahydrofurfurylalkohol; ungesättigte Alkohole wie Allylalkohol, 1,1-Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin oder Dicyclohexylamin sowie heterocylische sekundäre Amine wie Morpholin, Pyrrolidin, Piperidin oder 1H-Pyrazol.

Bevorzugte Startermoleküle sind gesättigte Monoalkohole mit bis zu 4 Kohlenstoffatomen. Besonders bevorzugt wird Methanol als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen (B2) handelt es sich entweder um reine Polyethylenoxidpolyether

oder gemischte Polyalkylenoxidpolyether, deren Alkylenoxideinheiten zu mindestens 30 mol-%, vorzugsweise zu mindestens 40 mol-% aus Ethylenoxideinheiten bestehen.

Bevorzugte Ausgangskomponenten (B2) zur Herstellung der wasserdispergierbaren Polyisocyanatgemische (B) sind reine Polyethylenglycolmonomethyletheralkohole, die im statistischen Mittel 7 bis 30, ganz besonders bevorzugt 7 bis 25 Ethylenoxideinheiten aufweisen.

Gegebenenfalls, jedoch weniger bevorzugt, können zusätzlich zu den genannten Polyetheralkoholen (B2) in untergeordneten Mengen noch weitere gegenüber Isocyanaten reaktive Verbindungen mit anionischen oder kationischen Gruppen, beispielsweise mit Carboxylat-, Sulfonat- oder Ammoniumgruppen, als hydrophile Aufbaukomponenten mitverwendet werden.

Zur Herstellung der wasserdispergierbaren Polyisocyanatgemische (B) werden die Ausgangskomponenten (B 1) und (B2) bei Temperaturen von 40 bis 180°C, vorzugsweise 50 bis 150°C, unter Einhaltung eines NCO-/OH-Äquivalent-Verhältnisses von 6:1 bis 400:1, vorzugsweise von 8:1 bis 140:1, so miteinander umgesetzt, dass mindestens 60 mol-%, vorzugsweise mindestens 80 mol-%, besonders bevorzugt mindestens 90 mol-% der durch NCO/OH-Reaktion primär gebildeten Urethangruppen zu Allophanatgruppen weiterreagieren.

Zur Beschleunigung der Allophanatisierungsreaktion können dabei gegebenenfalls geeignete Katalysatoren mitverwendet werden. Hierbei handelt es sich um die üblichen bekannten Allophanatisierungskatalysatoren, beispielsweise um Metallcarboxylate, Metallchelate oder tertiäre Amine der in der GB-A-0 994 890 beschriebenen Art, um Alkylierungsmittel der in der US-PS 3 769 318 beschriebenen Art oder um starke Säuren, wie sie in der EP-A-0 000 194 beispielhaft beschrieben sind.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Aluminium-tri(ethylaceto-acetat), Eisen-(III)-chlorid, Kaliumoctoat, Mangan- Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Zur Herstellung der wasserdispergierbaren Polyisocyanatgemische (B) sind auch solche Verbindungen als Katalysator geeignet, die neben der Allophanatisierungsreaktion auch die Trimerisierung von Isocyanatgruppen unter Bildung von Isocyanuratstrukturen katalysieren. Solche Katalysatoren sind beispielsweise in der EP-A-0 649 866, Seite 4, Zeile 7 bis Seite 5, Zeile 15 beschrieben.

Bevorzugte Katalysatoren zur Herstellung der wasserdispergierbaren Polyisocyanatgemische (B) sind Zinkverbindungen der obengenannten Art. Ganz besonders bevorzugt ist die Verwendung Zink-(II)-n-octanoat, Zink-(II)-2-ethyl-1-hexanoat und/oder Zink-(II)-stearat.

Diese Katalysatoren kommen in einer Menge von bis zu 5 Gew.-%, vorzugsweise 0,005 bis 1 Gew.-%, bezogen auf das Gesamtgewicht der Reaktionspartner zum Einsatz.

Die Zugabe zum Reaktionsgemisch kann dabei nach beliebigen Methoden erfolgen. So ist es beispielsweise möglich, den gegebenenfalls mitzuverwendenden Katalysator entweder der Polyisocyanatkomponente (B1) und/oder der Polyetherkomponente (B2) vor Beginn der eigentlichen Umsetzung zuzumischen. Ebenso ist es möglich, den Katalysator dem Reaktionsgemisch zu einem beliebigen Zeitpunkt während der Urethanisierungsreaktion oder im Sinne einer zweistufigen Reaktionsführung auch im Anschluss an die Urethanisierung, d. h. wenn der einem vollständigen Umsatz von Isocyanat- und Hydroxylgruppen theoretisch entsprechende NCO-Gehalt erreicht ist, zuzusetzen.

Der Verlauf der Umsetzung kann durch z. B. titrimetrische Bestimmung des NCO-Gehaltes verfolgt werden. Nach Erreichen des angestrebten NCO-Gehaltes, vorzugsweise wenn das molare Verhältnis von Allophanatgruppen zu Urethangruppen im Reaktionsgemisch mindestens 4 : 1, besonders bevorzugt mindestens 9 : 1, beträgt, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Allophanatisierungskatalysators der genannten Art wird die Umsetzung im allgemeinen aber durch Zugabe geeigneter Katalysatorgifte, beispielsweise Säurechloride wie Benzoylchlorid oder Isophthaloyldichlorid, abgestoppt.

Im übrigen werden bei der Herstellung der wasserdispergierbaren Polyisocyanatgemische (B) Art und Mengenverhältnisse der Ausgangskomponenten im Rahmen der gemachten Angaben so gewählt, dass die resultierenden Polyisocyanatgemische den oben unter a) bis c) gemachten Angaben entsprechen, wobei a) die mittlere NCO-Funktionalität vorzugsweise 2,3 bis 9,9, besonders bevorzugt 2,8 bis 5,8, b) der NCO-Gehalt vorzugsweise 6,0 bis 22,5 Gew.-%, besonders bevorzugt 8,5 bis 21,5 Gew.-% und c) der Gehalt an innerhalb von Polyetherketten gebundenen Ethylenoxideinheiten vorzugsweise 5 bis 40 Gew.-%, besonders bevorzugt 7 bis 25 Gew.-% beträgt.

Die gemachten Angaben bezüglich der NCO-Funktionalität der wasserdispergierbaren Polyisocyanatgemische (B) beziehen sich dabei auf den Wert, der sich rechnerisch aus Art und Funktionalität der Ausgangskomponenten nach der Formel

$$F = \frac{\sum \text{val NCO} - \sum (1+x) \cdot \text{mol OH}}{\sum \left( \frac{\text{val NCO}}{f_{NCO}} \right) + \sum \text{mol OH} - \sum (1+x) \cdot \text{mol OH}}$$

bestimmen lässt, in welcher x den Anteil der beim erfindungsgemäßen Verfahren zu Allophanatgruppen umgesetzten Urethangruppen bedeutet. Die Funktionalität fNCO der Ausgangspolyisocyanate B1) lässt sich aus dem NCO-Gehalt und dem beispielsweise durch Gelpermeationschromatographie (GPC) oder Dampfdruckosmose bestimmten Molekulargewicht errechnen.

Die Herstellung der wasserdispergierbaren Polyisocyanatgemische (B) kann gegebenenfalls in einem geeigneten, gegenüber Isocyanatgruppen inerten Lösemittel durchgeführt werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, Mischungen, die vor allem höher substituierte Aromaten enthalten, wie sie beispielsweise unter den Bezeichnungen Solvent Naphtha, Solvesso® (Exxon), Cypar® (Shell), Cyclo Sol® im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Die erfindungsgemäßen Bindemittelkombinationen werden bevorzugt für die Formulierung von Beschichtungen verwendet. Dabei werden die erfindungsgemäßen Polyurethandispersionen entweder allein oder in Kombination mit anderen wässrigen Bindemitteln eingesetzt, die auch hydroxy- oder aminofunktionell sein können. Solche wässrigen Bindemittel können z. B. aus Polyester-, Polyacrylat, Polyepoxid- oder Polyurethanpolymeren mit Hydroxy- oder Aminogruppen aufgebaut sein. Auch die Kombination mit weiteren Bindemitteln, die keine Hydroxy- oder Aminogruppen enthalten, ist möglich. Als Beispiel seien genannt: Polyacrylat- oder Polyacrylat-Polystyrol-Emulsionspolymerisate oder strahlenhärtbare Bindemittel.

Die folgenden Beispiele erläutern die Erfindung. Der Begriff "Allophanatisierungsgrad" bezeichnet den aus dem NCO-Gehalt errechenbaren prozentualen Anteil der zu Allophanatgruppen umgesetzten, aus Polyetheralkohol und Polyisocyanat entstandenen Urethangruppen. Alle übrigen Prozentangaben beziehen sich auf das Gewicht.

**Beispiele:**

**Beispiel D1** Polyurethan-Dispersion 1

389 g eines Polyesters aus Adipinsäure, Hexandiol und Neopentylglykol (Hydroxylzahl 112 mg KOH/ g), 28 g Neopentylglykol, 39 g Dimethylolpropionsäure und 220 g N-Methylpyrrolidon werden auf 70°C aufgeheizt und gerührt, bis sich eine klare Lösung gebildet hat. Anschließend wird eine Mischung aus 157 g 4,4'-Diisocyanatodicyclohexylmethan und 199 g Isophorondiisocyanat zugegeben. Eine exotherme Reaktion setzt ein. Der Ansatz wird so lange bei 100°C gehalten, bis der NCO-Gehalt 4,3 Gew.-% beträgt. Nun wird auf 50°C abgekühlt und 30 g Triethylamin zugegeben und durch 10-minütiges Rühren homogenisiert. Dann werden 850 g der neutralisierten Harzlösung unter Rühren in 940 g 42°C warmem Wasser unter Rühren dispergiert. Es wird noch weitere 5 min gerührt, dann wird eine Lösung von 9,2 g Ethylendiamin und 10,5 g Diethylentriamin in 104 g Wasser innerhalb von 20 min zugegeben. Das Produkt ist eine Polyurethan-Dispersion mit einer mittleren Teilchengröße von 58 nm (bestimmt durch Laserkorrelationsspektroskopie).

**Beispiel D2:** Polyurethan-Dispersion 2

525,0 g eines Polyesters aus Adipinsäure und Hexandiol (OH-Zahl 70 mg KOH/ g, Säurezahl 0,9 mg KOH/ g), 124,3 g 1,6-Hexandiol, 44,9 g Dimethylolpropionsäure und 183,6 g N- werden auf 70°C aufgeheizt und gerührt, bis sich eine klare Lösung gebildet hat. Anschließend werden 535,0 g Isophorondiisocyanat zugefügt und der Ansatz auf 80°C erhitzt. Bei dieser Temperatur wird solange gerührt, bis der Isocyanatgehalt der so hergestellten Präpolymerlösung 4,2 % beträgt. Nun kühlt man auf 70°C ab und gibt 33,8 g Triethylamin zu. In einem zweiten 2 l-Dreihalskolben mit Innenthermometer und Rührer werden 1665,0 g Wasser bei 40°C vorgelegt. Dann werden 1250 g des Präpolymers so unter kräftigem Rühren zugegeben, dass die Temperatur 40°C nicht übersteigt. Hierzu wird mit einem Wasser/ Eisbad gekühlt. Die Dispersion wird auf 20°C abgekühlt. Anschließend wird innerhalb von 15 min eine Lösung von 28,2 g Ethylendiamin in 184,5 g Wasser zugegeben. Bei 30°C wird die Dispersion dann gerührt, bis infrarotspektroskopisch kein Isocyanat mehr nachweisbar ist. Das Produkt ist eine Polyurethan-Dispersion mit einer mittleren Teilchengröße von 66 nm (bestimmt durch Laserkorrelationsspektroskopie).

**Beispiel D3:** Polyurethan-Dispersion 3

366,9 g eines Polyesters aus Adipinsäure, Hexandiol und Neopentylglykol (Hydroxylzahl 112 mg KOH/ g), 26,4 g Neopentylglykol, 37,2 g Dimethylolpropionsäure und 342,9 g Dipropylenglykoldimethylether werden auf 70°C aufgeheizt und gerührt, bis sich eine klare Lösung gebildet hat. Nun werden 369,7 g 4,4'-Diisocyanato-dicyclohexylmethan und 0,8 g Dibutylzinndilaurat zugegeben. Es tritt eine exotherme Reaktion ein. Der Ansatz wird bei 75°C so lange gehalten, bis der NCO-Gehalt 3,8 Gew.-% beträgt. Nun wird auf 40°C abgekühlt und 28 g Triethylamin zugegeben und durch 10-minütiges Rühren homogenisiert. Dann werden 1000 g der neutralisierten Harzlösung unter Rühren in 939,2 g 22°C warmem Wasser unter Rühren dispergiert. Es wird noch weitere 10 min gerührt, dann wird eine Lösung von 11,9 g Ethylendiamin und 13,6 g Diethylentriamin in 83,3 g Wasser innerhalb von 20 min zugegeben. Das Produkt ist eine Polyurethan-Dispersion mit einer mittleren Teilchengröße von 37 nm (bestimmt durch Laserkorrelationsspektroskopie).

**Beispiel I1:** Wasserdispergierbares Polyisocyanatgemisch, erfindungsgemäß

870 g (4,50 val) eines Isocyanuratgruppen-haltigen Polyisocyanates auf Basis von 1,6-Diisocyanatohexan (HDI) mit einem NCO-Gehalt von 21,7 %, einer mittleren NCO-Funktionalität von 3,5 (nach GPC), einem Gehalt an monomerem HDI von 0,1 % und einer Viskosität von 3000 mPas (23°C) werden bei 100°C unter trockenem Stickstoff und Rühren vorgelegt, innerhalb von 30 min mit 130 g (0,37 val) eines auf Methanol gestarteten, monofunktionellen Polyethylenoxidpolyethers eines mittleren Molekulargewichtes von 350, entsprechend einem NCO/OH-Äquivalentverhältnis von 12 : 1, versetzt und anschließend bei dieser Temperatur weitergerührt, bis der NCO-Gehalt der Mischung nach etwa 2 h auf den einer vollständigen Urethanisierung entsprechenden Wert von 17,3 % gefallen ist. Durch Zugabe von 0,01 g Zink-(II)-2-ethyl-1-hexanoat wird die Allophanatisierungsreaktion gestartet. Dabei steigt die Temperatur des Reaktionsgemisches aufgrund der freiwerdenden Reaktionswärme bis auf 106°C an. Nach Abklingen der Exothermie, etwa 30 min nach Katalysatorzugabe, wird die Reaktion durch Zugabe von 0,01 g Benzoylchlorid abgebrochen und das Reaktionsgemisch auf Raumtemperatur abgekühlt. Es liegt ein erfindungsgemäßes, praktisch farbloses klares Polyisocyanatgemisch mit folgenden Kenndaten vor:

| | |
|---|---|
| NCO-Gehalt: | 15,9 % |
| Viskosität (23°C): | 6400 mPas |
| Ethylenoxidgehalt: | 11,8 % |
| Allophanatisierungsgrad: | 93 % |

**Beispiel I2:** Vergleichspolyisocyanat, gemäß EP-B-0 540 985

870 g (4,50 val) des in Beispiel 3 beschriebenen Isocyanuratgruppen-haltigen Polyisocyanates auf Basis von HDI werden bei 100°C unter trockenem Stickstoff und Rühren vorgelegt, innerhalb von 30 min mit 130 g (0,37 val) des in Beispiel 3 beschriebenen Polyetheralkohols versetzt und bei dieser Temperatur weiter gerührt, bis der NCO-Gehalt der Mischung nach etwa 2 h auf den einer vollständigen Urethanisierung entsprechenden Wert von 17,3 % gefallen ist. Nach Abkühlen auf Raumtemperatur liegt ein farbloses, klares Polyisocyanatgemisch mit folgenden Kenndaten vor:

| | |
|---|---|
| NCO-Gehalt: | 17,3 % |
| Viskosität (23°C): | 3600 mPas |
| Ethylenoxidgehalt: | 11,8 % |
| Allophanatisierungsgrad: | 0 % |

Zur Formulierung von 1K - Klarlacken wurden den Dispersionen aus Beispiel 1 und 2 folgende Rezepturbestandteile zugefügt:

- Butylglykol (5 Gew.-%, 50 %-ig in Wasser)
- Entschäumer: Tego Foamex® 805 (Tego Chemie, 0,2 Gew.-%)
- Additiv zur Verbesserung der Untergrundbenetzung: Byk® 346 (Byk-Chemie GmbH, 0,5 Gew.-%)
- Verdicker: Acrysol® RM8 (Rohm and Haas, 1,0 Gew.-%)
- zusätzlich wurde der Dispersion aus Beispiel 1 weitere 2 Gew.-% N-Methylpyrrolidon zugefügt.

Zur Formulierung der Härterkomponente wurden den Polyisocyanathärten I1 und I2 für Versuch 2 und 3 33

Gew.-%, sowie für Versuchs 5 und 6 53 Gew.-%. Dipropylenglykoldimethylether zugegeben. Zur Formulierung der 2K-Klarlacke wurden diese Härterlösungen in nachfolgend beschriebenen Kombinationen in die o.a. 1K-Klarlacke 1 Minute lang eingeschüttelt:

| | ohne Härter | mit Härter I1 | mit Härter I2 |
|---|---|---|---|
| Dispersion (Beispiel D1) | Versuch 1 (1K) | Versuch 2 (2K) | Versuch 3 (2K) |
| Klarlack aus Beispiel D2 | Versuch 4 (1K) | Versuch 5 (2K) | Versuch 6 (2K) |

Die Lacke wurden

a) mit 200μm Spaltbreite auf Glasplatten aufgerakelt. Anschließend wurde der Verlauf der Härteentwicklung (Pendeldämpfung nach DIN 53 157), sowie nach 14 Tagen der Abriebwert (nach DIN 53 754, Taber Abraser, CS 10 / 1kg/1000 Umdr.) bestimmt.

b) in 3 Schichten (jeweils 100 g Lack/ $m^2$) auf Eichenholzplatten appliziert. Nach jedem Schritt wurde für 30 min bei 50°C forciert getrocknet, vor Applikation der 2. und 3. Schicht wurde die Lackoberfläche leicht angeschliffen.

Nach 7 Tagen wurden die Beständigkeiten gegen Ethanol (50 %-ige wässrige Lösung) sowie Aceton bestimmt. Hierzu wurde folgende Methode angewendet: Mit dem Lösemittel getränkte Wattebäusche werden auf 7 Tage alte Lackfilme aufgelegt und mit Petrischalen abgedeckt. Nach Einwirkzeiten 30 Minuten (Ethanol) bzw. 10 Sekunden (Aceton) erfolgt die Beurteilung, nachdem die nassen Filme mit Haushaltspapier vorsichtig getrocknet wurden.

Die Beurteilung der Schuhsohlenbeständigkeit erfolgt durch schlagartiges Verletzen der Filmoberfläche mit einer handelsüblichen Reparatur-Schuhsohle. Beurteilt wird die Erweichung des Lackfilmes bzw. die Schuhsohlenfestigkeit in einer Skala von 0 bis 4:

| **Wert** | **Erweichung** | **Schuhsohlenbeständigkeit** |
|---|---|---|
| 0 | Unverändert | Unverändert |
| 1 | sehr schwach | leichte Spur erkennbar |
| 2 | etwas stärker | leichte Kratzer erkennbar |
| 73 | mit Fingernagel leicht zu beschädigen | Kratzer deutlich erkennbar |
| 4 | lässt sich wegwischen | Oberfläche eingebrannt |

Die folgenden Prüfergebnisse zeigen die hochwertigen Beständigkeitseigenschaften von 2-Lacken aus den erfindungsgemäßen Beispielen gegenüber den entsprechenden 1K-Lacken, sowie die guten optischen Eigenschaften (Glanz bzw. Trübung) von Beispiel 3 gegenüber Beispiel 4. Gleichzeitig erkennt man, dass auch die 1K-Lacke (Versuche 1 und 4) ohne Isocyanat-Härter bei geringeren Anforderungen an die Beständigkeiten als Beschichtungsmittel geeignet sind.

| | Versuch 1 (1K) | Versuch 2 (2K) | Versuch 3 (2K) |
|---|---|---|---|
| Kombination: | D1 | D1/I1 | D1/I2 |
| Einarbeitung: | --- | ok | ok |
| Drucktrockn. (h) | 1,7 | 2,5 | 1,5 |
| Pendelh. 1 d/7d | 64 / 105 | 46 / 99 | 46 / 76 |
| Alkohol (30min) | 3 | 1 | 3 |
| Aceton (10s) | 3 | 1 | 1 |
| Schuhsohlenbest. | 4 | 0 | 0 |
| Abrieb (mg) | 29 | 15 | 13 |
| Glanz (60°) | 89 | 87 | < 50 |

(fortgesetzt)

| | Versuch 1 (1K) | Versuch 2 (2K) | Versuch 3 (2K) |
|---|---|---|---|
| Transparenz | klar | klar | trüb |
| | Versuch 4 (1K) | Versuch 5 (2K) | Versuch 6 (2K) |
| Kombination: | D2 | D2/I1 | D2/I2 |
| Einarbeitung | --- | ok | ok |
| Drucktrockn. (h) | 1,5 | 1,5 | 1,5 |
| Pendelh. 1d/7d | 104 / 137 | 59 / 127 | 57 / 130 |
| Alkohol (30min) | 1 | 1 | 1 |
| Aceton (10s) | 4 | 1 | 1 |
| Schuhsohlenbest. | 4 | 0 | 0 |
| Abriebwert (mg) | 18 | 15 | 16 |
| Glanz (60°) | 88 | 88 | 49 |
| Transparenz | klar | klar | trüb |

**Patentansprüche**

**1.** Wässrige Bindemittelkombination bestehend aus

70 - 99 % einer Polyurethan-Dispersion A) mit einer OH-Zahl < 10 mg KOH/g Festharz wobei die Polyurethan-Dispersion A) aufgebaut ist aus

A1. 5 - 70 % Diisocyanate des Molekulargewichtsbereichs 140 bis 400, mit aliphatisch, cycloaliphatisch, araliphatisch und/oder aromatisch gebundenen Isocyanatgruppen,
A2. 10 - 80 % polymeren Polyolen mit mittleren Molgewichten von 400 bis 6000,
A3. 0 -10 % Monoalkoholen oder Monoaminen,
A4. 0,5 - 15 % Polyolen, Aminopolyolen oder Polyaminen mit einem Molgewicht unter 400, wobei bevorzugt eine oder mehrere der Verbindungen (A3) und/oder (A4) eine ionische Gruppe enthält oder zur Ausbildung einer ionischen Gruppe befähigt ist und
A5. 0 - 20 % Polyoxyalkylenether mit mindestens einer Hydroxy- oder Aminogruppe,

1 - 30 % eines wasserdispergierbaren Polyisocyanatgemisches B) einem Gehalt an innerhalb von Polyetherketten gebundenen Ethylenoxideinheiten (berechnet als $C_2H_4O$; Molekulargewicht 44) von 2 bis 50 Gew.-%, wobei die Polyetherketten im statistischen Mittel 5 bis 35 Ethylenoxideinheiten enthalten,
welches aufgebaut ist aus einer Polyisocyanatkomponente (B1) einer (mittleren) NCO-Funktionalität von 2,0 bis 5,0 mit einem Gehalt an aliphatisch, cycloaliphatisch, araliphatisch und/oder aromatisch gebundenen Isocyanatgruppen (berechnet als NCO; Molekulargewicht 42) von 8,0 bis 27,0 Gew.-% und einem Gehalt an monomeren Diisocyanaten von weniger als 1 Gew.-% und einem einwertigen, im statistischen Mittel von 5 bis 35 Ethylenoxideinheiten aufweisenden Polyalkylenoxidpolyetheralkohol (B2), und
welches **dadurch gekennzeichnet ist, dass** die Polyetherketten zu mindestens 60 mol-% über Allophanatgruppen mit jeweils zwei, jeweils aus mindestens zwei Diisocyanaten aufgebauten Polyisocyanatmolekülen verknüpft sind,
wobei gilt, dass die Prozentangaben sich auf das Gewicht nichtflüchtiger Anteile beziehen und zu 100 % addieren.

**2.** Wässrige Bindemittelkombination gemäß Anspruch 1, **dadurch gekennzeichnet, dass** die Polyurethan-Dispersion (A) eine OH-Zahl < 10 mg KOH/ g und eine mittlere Teilchengröße < 100 nm aufweist.

**3.** Wässrige Bindemittelkombination gemäß Ansprüche 1 bis 2, **dadurch gekennzeichnet, dass** die Polyurethan-Dispersion aufgebaut ist aus einer PolyisocyanatKomponente (A1) bestehend aus Isophorondiisocyanat und/oder

4,4'-Diisocyanatodicyclohexylmethan.

4. Wässrige Bindemittelkombination gemäß Ansprüchen 1 bis 3, **dadurch gekennzeichnet, dass** die Polyisocyanatkomponente (B1) eine Funktionalität von 2,3 bis 4,5 und einen Gehalt an Isocyanatgruppen von 14,0 bis 24,0 % aufweist.

5. Verfahren zur Herstellung eines Zweikomponentenlacks auf Basis einer Bindemittelkombination gemäß Ansprüchen 1 bis 4, **dadurch gekennzeichnet, dass** die Isocyanat-Härterkomponente (B), ggf. gelöst in einem geeigneten Lösemittel, in das Bindemittel auf Basis der Polyurethan-Dispersion (A) eingearbeitet wird.

6. Verwendung von Bindemittelkombinationen gemäß Ansprüchen 1 bis 4 in Beschichtungen und Klebstoffen.

7. Verwendung von Bindemittelkombinationen gemäß Ansprüchen 1 bis 4 zur Beschichtung von Fußböden

## Claims

1. Aqueous binder combination consisting of

   70% - 99% of a polyurethane dispersion A) having an OH number < 10 mg KOH/g resin solids, the polyurethane dispersion A) being constructed from

      A1. 5% - 70% of diisocyanates from the molecular weight range 140 to 400, having aliphatically, cycloaliphatically, araliphatically and/or aromatically bonded isocyanate groups,
      A2. 10% - 80% of polymeric polyols having average molar weights of 400 to 6000,
      A3. 0% - 10% of monoalcohols or monoamines,
      A4. 0.5% - 15% of polyols, aminopolyols or polyamines having a molar weight of below 400, with preferably one or more of the compounds (A3) and/or (A4) containing an ionic group or being capable of forming an ionic group, and
      A5. 0% - 20% of polyoxyalkylene ethers having at least one hydroxyl or amino group,

   1% - 30% of a water-dispersible polyisocyanate mixture B) having a content of ethylene oxide units bonded within polyether chains (and calculated as $C_2H_4O$; molecular weight 44) of 2% to 50% by weight, the polyether chains containing on average 5 to 35 ethylene oxide units,
   and being constructed from a polyisocyanate component (B1) having an (average) NCO functionality of 2.0 to 5.0, having a content of aliphatically, cycloaliphatically, araliphatically and/or aromatically bonded isocyanate groups (calculated as NCO; molecular weight 42) of 8.0% to 27.0% by weight and a content of monomeric diisocyanates of less than 1% by weight, and from a monohydric polyalkylene oxide polyether alcohol (B2) containing on average from 5 to 35 ethylene oxide units, and
   which is **characterized in that** at least 60 mol% of the polyether chains are linked via allophanate groups to in each case two polyisocyanate molecules each constructed from at least two diisocyanates,
   the percentages being based on the weight of nonvolatile fractions and adding up to 100%.

2. Aqueous binder combination according to Claim 1, **characterized in that** the polyurethane dispersion (A) has an OH number < 10 mg KOH/g and an average particle size < 100 nm.

3. Aqueous binder combination according to Claims 1 and 2, **characterized in that** the polyurethane dispersion is constructed from a polyisocyanate component (A1) consisting of isophorone diisocyanate and/or 4,4'-diisocyanatodicyclohexylmethane.

4. Aqueous binder combination according to Claims 1 to 3, **characterized in that** the polyisocyanate component (B1) has a functionality of 2.3 to 4.5 and a content of isocyanate groups of 14.0% to 24.0%.

5. Method for producing a two-component coating material based on a binder combination according to Claims 1 to 4, **characterized in that** the isocyanate curing component (B), optionally in solution in a suitable solvent, is incorporated into the binder based on the polyurethane dispersion (A).

6. Use of binder combinations according to Claims 1 to 4 in coatings and adhesives.

7. Use of binder combinations according to Claims 1 to 4 for coating floors.

## Revendications

1. Association aqueuse de liants consistant en

70 - 99 % d'une dispersion de polyuréthane A) ayant un indice de groupes OH < 10 mg de KOH/g de résine solide, la dispersion de polyuréthane A) étant constituée de

A1. 5 - 70 % de diisocyanates ayant une plage de masse moléculaire de 140 à 400, comportant des groupes isocyanate en liaison aliphatique, cycloaliphatique, araliphatique et/ou aromatique,
A2. 10 - 80 % de polyols polymères ayant des masses moléculaires moyennes de 400 à 6 000,
A3. 0 - 10 % de monoalcools ou de monoamines,
A4. 0,5 - 15 % de polyols, aminopolyols ou polyamines ayant une masse moléculaire inférieure à 400, de préférence un ou plusieurs des composés (A3) et/ou (A4) contenant un groupe ionique ou étant apte(s) à la formation d'un groupe ionique et
A5. 0 - 20 % de polyoxyalkylène-éthers comportant au moins un groupe hydroxy ou amino,

1 - 30 % d'un mélange de polyisocyanates B) dispersable dans l'eau, ayant une teneur en unités oxyde d'éthylène liées à l'intérieur de chaînes polyéther (calculée en $C_2H_4O$ ; masse moléculaire 44) de 2 à 50 % en poids, les chaînes polyéther contenant en moyenne statistique 5 à 35 unités oxyde d'éthylène,
qui est constitué d'un composant polyisocyanate (B1) ayant une fonctionnalité NCO (moyenne) de 2,0 à 5,0 avec une teneur en groupes isocyanate en liaison aliphatique, cycloaliphatique, araliphatique et/ou aromatique (calculée en NCO ; masse moléculaire 42) de 8,0 à 27,0 % en poids et une teneur en diisocyanates monomères de moins de 1 % en poids et d'un polyoxyalkylène-polyétheralcool (B2) monovalent, comportant en moyenne statistique de 5 à 35 unités oxyde d'éthylène, et
qui est **caractérisé en ce que** les chaînes polyéther sont reliées à raison d'au moins 60 % en moles par des groupes allophanate comportant chacun deux molécules de polyisocyanate constituées chacune d'au moins deux diisocyanates,
les pourcentages se rapportant au poids des fractions non volatiles et faisant au total 100 %.

2. Association aqueuse de liants selon la revendication 1, **caractérisée en ce que** la dispersion de polyuréthane (A) présente un indice de groupes OH < 10 mg de KOH/g et une taille moyenne de particule < 100 nm.

3. Association aqueuse de liants selon les revendications 1 et 2, **caractérisée en ce que** la dispersion de polyuréthane est constituée d'un composant polyisocyanate (A1) consistant en isophorone-diisocyanate et/ou 4,4'-diisocyanato-dicyclohexylméthane.

4. Association aqueuse de liants selon les revendications 1 à 3, **caractérisée en ce que** le composant polyisocyanate (B1) présente une fonctionnalité de 2,3 à 4,5 et une teneur en groupes isocyanate de 14,0 à 24,0 %.

5. Procédé pour la production d'une peinture bicomposant à base d'une association de liants selon les revendications 1 à 4, **caractérisé en ce qu'**on incorpore dans le liant à base de la dispersion de polyuréthane (A) le composant durcisseur isocyanate (B), éventuellement dissous dans un solvant convenable.

6. Utilisation d'associations de liants selon les revendications 1 à 4 dans des revêtements et des adhésifs.

7. Utilisation d'associations de liants selon les revendications 1 à 4, pour le revêtement de sols.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0358979 A
- EP 0540985 B
- DE 19847077 A
- DE 19822890 A
- DE 1670666 A
- DE 1954093 A
- DE 2414413 A
- DE 2452532 A
- DE 2641380 A
- DE 3700209 A
- DE 3900053 A
- DE 3928503 A
- EP 0336205 A
- EP 0339396 A
- EP 0798299 A
- DE 1953348 A
- EP 0167188 A
- EP 0189945 A
- EP 0308115 A
- GB 0994890 A
- US PS3769318 A
- EP 0000194 A
- EP 0649866 A


### In der Beschreibung aufgeführte Nicht-Patentliteratur


- **D. DIETERICH.** *Prog. Org. Coatings,* 1981, vol. 9, 281
- **VAIHINGER.** *I-Lack,* 1996, vol. 64 (12), 710
- **CARVER S.R.I.** *Technisches Merkblatt DIVA/ S, DIVA/ O, rev. 04,* 16. Februar 1998
- Diisocyanaten aufgebaute Polyisocyanate mit Uretdion-, Isocyanurat-, Urethan-, Allophanat-, Biuret-, Iminooxadiazindion- und/oder Oxadiazintrionstruktur. *J. Prakt. Chem.,* 1994, vol. 336, 185-200
- Ullmanns Encyclopädie der technischen Chemie. Verlag Chemie, vol. 19, 31-38